# EUROPEAN PATENT SPECIFICATION

(11) **EP 2 083 644 B1**
(45) Date of publication and mention of the grant of the patent: **06.07.2011**
(21) Application number: 07839909.4
(22) Date of filing: 02.11.2007
(51) Int. Cl.: A41D 31/02, B32B 7/12, B32B 5/26, B32B 27/02, B32B 27/12, B32B 27/34, D01D 5/00

(54) **LIQUID WATER RESISTANT AND WATER VAPOR PERMEABLE GARMENTS**
FLÜSSIGWASSERFESTES UND WASSERDAMPFDURCHLÄSSIGES KLEIDUNGSSTÜCK
VÊTEMENTS RÉSISTANTS À L'EAU ET PERMÉABLES À LA VAPEUR D'EAU

(30) Priority: 03.11.2006 US 592644
(43) Date of publication of application: 05.08.2009
(73) Proprietor: E.I. DU PONT DE NEMOURS AND COMPANY, Wilmington, DE 19898 (US)
(72) Inventor: CONLEY, Jill A., Midlothian, VA 23112 (US); GUCKERT, Joseph Robert, Chester, VA 23836 (US); MARIN, Robert Anthony, Midlothian, VA 23114 (US); PALMER, George Bruce, Richmond, VA 23221 (US)
(74) Representative: Dannenberger, Oliver Andre
(86) International application number: PCT/US2007/023146
(87) International publication number: WO 2008/057418

(56) References cited:
- WO-A-03/080905
- GB-A- 2 416 781

## Description

### FIELD OF THE INVENTION

This invention relates to garments with controlled moisture vapor and water management capability. The invention as claimed and disclosed has particular applications in outerwear.

### BACKGROUND OF THE INVENTION

Protective garments for wear in rain and other wet conditions should keep the wearer dry by preventing the leakage of water into the garment and by allowing perspiration to evaporate from the wearer to the atmosphere. "Breathable" materials that do permit evaporation of perspiration have tended to wet through from the rain, and they are not truly waterproof. Oilskins, polyurethane coated fabrics, polyvinyl chloride films and other materials are waterproof but do not allow satisfactory evaporation of perspiration.

Fabrics treated with silicone, fluorocarbon, and other water repellants usually allow evaporation of perspiration but are only marginally waterproof; they allow water to leak through under very low pressures and usually leak spontaneously when rubbed or mechanically flexed. Rain garments must withstand the impingement pressure of falling and wind blown rain and the pressures that are generated in folds and creases in the garment.

It is widely recognized that garments must be "breathable" to be comfortable. Two factors that contribute to the level of comfort of a garment include the amount of air that does or does not pass through a garment as well as the amount of perspiration transmitted from inside to outside so that the undergarments do not become wet and so natural evaporative cooling effects can be achieved. However even recent developments in breathable fabric articles using microporous films tend to limit moisture vapor transmission if air permeability is to be controlled.

Many waterproof structures currently available comprise a multilayer fabric structure that employs the use of a hydrophobic coating. This fabric structure is typically made of a woven fabric layer, a nanoweb-type microporous layer, and another woven or knit layer. The microporous layer is the functional layer of the construction that provides the appropriate air permeability and moisture vapor transmission rate necessary for the targeted application. For examples of such structures see U.S. patent numbers 5,217,782; 4,535,008; 4,560,611 7,682,994 and 5,204,156.

If a hydrophobic coating is to be applied to the fabric structure, then the technology currently available in the market is overdesigned for the application. A fabric is needed that provides an acceptable level of liquid water resistance and high moisture vapor transmission at a lower cost and higher productivity.

It is known that for a garment to be comfortable, it must accommodate the body's physiological need for thermal regulation. In warm environments, heat energy must be expelled from the body. This is done principally by a combination of direct thermal conduction of heat away from the body through the fabric and air layers at the skin surface, convection of heat away from the body by flowing air, and by the cooling effects of evaporation of sweat from the surface of the skin. Clothing which appreciably inhibits heat transfer can cause heat and moisture buildup and this can result in discomfort due to warm, sticky, clammy and or sweaty sensations. In the extreme case, for example, where protective clothing prevents adequate thermal regulation during activity in a warm and humid environment, such clothing limitations not only lead to discomfort, but can result in life-threatening heat stress. For this reason, frequently, clothing limitations impose limitations on activity to avoid the consequences of heat stress.

Studies have shown that the most comfortable garments with the least restrictions on physical activity in warm, humid environments are those most able to breathe through mechanisms of air exchange with the environment. (Bernard, T. E., N. W. Gonzales, N. L. Carroll, M. A. Bryner and J. P. Zeigler. "Sustained work rate for five clothing ensembles and the relationship to air permeability and moisture vapor transmission rate." American Industrial Hygiene Conference, Toronto, June 1999; N. W. Gonzales, "Maximum Sustainable Work for Five Protective Clothing Ensembles and the Effects of Moisture Vapor Transmission Rates and Air Permeability" Master's Thesis, College of Public Health, University of South Florida, December 1998).

Physical activity flexes fabric and garment. If a fabric has low enough resistance to air flow, this flexure produces a pumping action which pushes and pulls air back and forth through the fabric. By this mechanism, the exchange of warm moisture laden air within the garment with ambient air provides a significant cooling effect. Tests of protective garments made of the same cut, but with widely differing air flow resistance under warm humid conditions (32° C., 60% RH), have shown that the garments made of fabrics with the least air flow resistance repeatedly allowed subjects to achieve higher levels of activity without incurring heat stress. Conversely, garments made of fabrics with the highest air flow resistance limited the physical activity of the same subjects to the lowest levels to avoid heat stress. Garments made of fabrics having intermediate air flow resistance allowed subjects to achieve intermediate levels of activity without heat stress. The intermediate activity levels correlated very well with the air flow resistance of the fabric.

Clearly, under conditions where the body must transfer heat and moisture to maintain comfort or avoid heat stress, it is desirable for garments to be made with fabrics having low air flow resistance.

Clothing provides protection from hazards in the environment. The degree of protection clothing imparts is dependent upon the effectiveness of the barrier characteristics of the clothing. Where the function of the barrier is to keep environmental particulates or fluids from penetrating a garment to reach the wearer, barrier is easily correlated with fabric pore size. The most effective barriers generally have the smallest pore size.

Unfortunately, smaller pore size also generally results in higher air flow resistance. In the studies cited above, the garments with the highest barrier properties had the lowest air flow permeability and vice versa. So the ability to provide effective barrier protection in clothing and the ability to provide low air flow resistance, i.e., high air flow permeability, in the same garment are inversely related.

Microporous films have been used in barrier materials to achieve extremely high hydrostatic head liquid barrier properties, but at the expense of breathability, such that their air permeabilities are unacceptably low, rendering fabrics containing such films uncomfortable for the wearer.

The present invention is directed towards a layered material for a garment that provides controlled liquid water resistance in the presence of high vapor transmittance.

### SUMMARY OF THE INVENTION

The present invention is directed to a waterproof, breathable garment having the ability to pass moisture vapor while protecting the wearer from water comprising a composite fabric of a first outer fabric layer adjacent to and in a face-to-face relationship with a nanofiber layer, wherein the nanofiber layer comprises at least one porous layer of polymeric nanofibers having a number average diameter between about 50 nm to about 1000 nm, a basis weight of between about 1 g/m² and about 100 g/m² wherein the nanofiber layer is treated with a fluorinated surfactant, and wherein the composite fabric has a Frazier air permeability of between about 1.2 m³/m²/min and about 7.6 m³/m²/min, an MVTR of greater than about 500 g/m²/day, and a hydrostatic head of at least about 50 cm of water.

### DETAILED DESCRIPTION

The terms "nanofiber layer" and "nanoweb" are used interchangeably herein and refer to a nonwoven web of nanofibers.

The term "nanofiber" as used herein refers to fibers having a number average diameter or cross-section less than about 1000 nm, even less than about 800 nm, even between about 50 nm and 500 nm, and even between about 100 and 400 nm. The term diameter as used herein includes the greatest cross-section of non-round shapes.

The term "nonwoven" means a web including a multitude of randomly distributed fibers. The fibers generally can be bonded to each other or can be unbonded. The fibers can be staple fibers or continuous fibers. The fibers can comprise a single material or a multitude of materials, either as a combination of different fibers or as a combination of similar fibers each comprised of different materials.

"Meltblown fibers" are fibers formed by extruding a molten thermoplastic material through a plurality of fine, usually circular, die capillaries as molten threads or filaments into converging, usually hot and high velocity, gas, e.g. air, streams to attenuate the filaments of molten thermoplastic material and form fibers. During the meltblowing process, the diameter of the molten filaments is reduced by the drawing air to a desired size. Thereafter, the meltblown fibers are carried by the high velocity gas stream and are deposited on a collecting surface to form a web of randomly disbursed meltblown fibers. Such a process is disclosed, for example, in U.S. Pat. Nos. 3,849,241 to Buntin et al., 4,526,733 to Lau, and 5,160,746 to Dodge, II et al. Meltblown fibers may be continuous or discontinuous.

"Calendering" is the process of passing a web through a nip between two rolls. The rolls may be in contact with each other, or there may be a fixed or variable gap between the roll surfaces. Advantageously the nip is formed between a soft roll and a hard roll. The "soft roll" is a roll that deforms under the pressure applied to keep two rolls in a calender together. The "hard roll" is a roll with a surface in which no deformation that has a significant effect on the process or product occurs under the pressure of the process. An "unpatterned" roll is one which has a smooth surface within the capability of the process used to manufacture them. There are no points or patterns to deliberately produce a pattern on the web as it passed through the nip, unlike a point bonding roll.

By "garment" is meant any item that is worn by the user to protect some region of the user's body from weather or other factors in the environment outside the body. For example coats, jackets, hats, gloves, shoes, socks, and shirts would all be considered garments under this definition.

The invention is directed to a waterproof garment having the ability to maintain a high MVTR while controlling liquid water penetration. The garment comprises a nanofiber layer that in turn comprises at least one porous layer of polymeric nanofibers having a basis weight of between about 1 g/m² and about 100 g/m².

The invention further comprises a garment comprising a composite of a first fabric layer adjacent to and in a face-to-face relationship with the nanofiber layer, and optionally a second fabric layer adjacent to and in a face-to-face relationship with the nanofiber layer and on the opposite side of the nanofiber layer to the first fabric layer.

The garment of the invention further has a Frazier air permeability of no greater than about 7.6 m³/m²/min, and an MVTR per ASTM E-96B method of greater than about 500 g/m²/day, and a hydrostatic head of at least about 50 centimeters of water column (cmwc).

The nonwoven web may comprise primarily or exclusively nanofibers that are produced by electrospinning, such as classical electrospinning or electroblowing, and in certain circumstances by meltblowing processes. Classical electrospinning,is a technique illustrated in U.S. Patent No. 4,127,706, wherein a high voltage is applied to a polymer in solution to create nanofibers and nonwoven mats. The nonwoven web may also comprise melt blown fibers.

The "electroblowing" process for producing nanowebs is disclosed in World Patent Publication No. WO 03/080905. A stream of polymeric solution comprising a polymer and a solvent is fed from a storage tank to a series of spinning nozzles within a spinneret, to which a high voltage is applied and through which the polymeric solution is discharged. Meanwhile, compressed air that is optionally heated is issued from air nozzles disposed in the sides of or at the periphery of the spinning nozzle. The air is directed generally downward as a blowing gas stream which envelopes and forwards the newly issued polymeric solution and aids in the formation of the fibrous web, which is collected on a grounded porous collection belt above a vacuum chamber. The electroblowing process permits formation of commercial sizes and quantities of nanowebs at basis weights in excess of about 1 gsm, even as high as about 40 gsm or greater, in a relatively short time period.

The fabric layer of the invention can be arranged on the collector to collect and combine the nanoweb spun on the fabric, so that the composite is used as the fabric of the invention.

Polymer materials that can be used in forming the nanowebs of the invention are not particularly limited and include both addition polymer and condensation polymer materials such as, polyacetal, polyamide, polyester, polyolefins, cellulose ether and ester, polyalkylene sulfide, polyarylene oxide, polysulfone, modified polysulfone polymers and mixtures thereof. Preferred materials that fall within these generic classes include, poly(vinylchloride), polymethylmethacrylate (and other acrylic resins), polystyrene, and copolymers thereof (including ABA type block copolymers), poly(vinylidene fluoride), poly(vinylidene chloride), polyvinylalcohol in various degrees of hydrolysis (87% to 99.5%) in crosslinked and non-crosslinked forms. Preferred addition polymers tend to be glassy (a T_{g} greater than room temperature). This is the case for polyvinylchloride and polymethylmethacrylate, polystyrene polymer compositions or alloys or low in crystallinity for polyvinylidene fluoride and polyvinylalcohol materials. One preferred class of polyamide condensation polymers are nylon materials, such as nylon-6, nylon-6,6, nylon 6,6-6,10 and the like. When the polymer nanowebs of the invention are formed by meltblowing, any thermoplastic polymer capable of being meltblown into nanofibers can be used, including, polyesters such as poly(ethylene terephthalate) and polyamides, such as the nylon polymers listed above.

The as-spun nanoweb of the present invention can be calendered in order to impart the desired physical properties to the fabric of the invention. In one embodiment of the invention the as-spun nanoweb is fed into the nip between two unpatterned rolls in which one roll is an unpatterned soft roll and one roll is an unpatterned hard roll, and the temperature of the hard roll is maintained at a temperature that is between the T_{g}, herein defined as the temperature at which the polymer undergoes a transition from glassy to rubbery state, and the Tₒₘ, herein defined as the temperature of the onset of melting of the polymer, such that the nanofibers of the nanoweb are at a plasticized state when passing through the calendar nip. The composition and hardness of the rolls can be varied to yield the desired end use properties of the fabric. In one embodiment of the invention, one roll is a hard metal, such as stainless steel, and the other a soft-metal or polymer-coated roll or a composite roll having a hardness less than Rockwell B 70. The residence time of the web in the nip between the two rolls is controlled by the line speed of the web, preferably between about 1 m/min and about 50 m/min, and the footprint between the two rolls is the MD distance that the web travels in contact with both rolls simultaneously. The footprint is controlled by the pressure exerted at the nip between the two rolls and is measured generally in force per linear CD dimension of roll, and is preferably between about 1 mm and about 30 mm.

Further, the nanoweb can be stretched, optionally while being heated to a temperature that is between the T_{g} and the lowest Tₒₘ of the nanofiber polymer. The stretching can take place either before and/or after the web is fed to the calender rolls and in either or both the machines direction or cross direction.

A hydrophobic nonwoven sheet containing nanofibers can be produced according to the present invention by depositing a nanoweb of conventional hydrophilic polymer nanofibers onto a collecting/supporting web and treating the web's nanofibers with a hydrophobic treatment, such as a fluorocarbon material. When the coating material is applied in an extremely thin layer, little if any change in the air permeability properties of the underlying web is caused, for example as described in U.S. provisional application No. 60/391,864, filed 26 Jun. 2002. Alternatively, the formed nanoweb can be immersed in a solution of a coating material, for example a fluorosurfactant, and then dried.

In a preferred embodiment of the invention the fluorinated surfactant is one of the Zonyl® line of surfactants produced by the DuPont company.

A wide variety of natural and synthetic fabrics are known and may be used as the fabric layer or layers in the present invention, for example, for constructing garments, such as sportswear, rugged outerwear and outdoor gear, protective clothing, etc. (for example, gloves, aprons, chaps, pants, boots, gators, shirts, jackets, coats, socks, shoes, undergarments, vests, waders, hats, gauntlets, sleeping bags, tents, etc.). Typically, vestments designed for use as rugged outerwear have been constructed of relatively loosely-woven fabrics made from natural and/or synthetic fibers having a relatively low strength or tenacity (for example, nylon, cotton, wool, silk, polyester, polyacrylic, polyolefin, etc.). Each fiber can have a tensile strength or tenacity of less than about 8 g/Denier (gpd), more typically less than about 5 gpd, and in some cases below about 3 gpd. Such materials can have a variety of beneficial properties, for example, dyeability, breathability, lightness, comfort, and in some instances, abrasion-resistance.

Different weaving structures and different weaving densities may be used to provide several alternative woven composite fabrics as a component of the invention. Weaving structures such as plain woven structures, reinforced plain woven structures (with double or multiple warps and/or wefts), twill woven structures, reinforced twill woven structures (with double or multiple warps and/or wefts), satin woven structures, reinforced satin woven structures (with double or multiple warps and/or wefts), knits, felts, fleeces and needlepunched structures may be used. Stretch woven structures, ripstops, dobby weaves, and jacquard weaves are also suitable for use in the present invention.

The nanoweb is bonded to the fabric layers over some fraction of its surface and can be bonded to the fabric layer by any means known to one skilled in the art, for example adhesively, thermally, using an ultrasonic field or by solvent bonding. In one embodiment the nanoweb is bonded adhesively using a solution of a polymeric adhesive such as a polyurethane and allowing the solvent to evaporate. In a further embodiment, when the nanoweb is electrospun directly onto a fabric layer and residual electrospinning solvent is used to achieve solvent bonding.

### Examples

Hydrostatic head or "hydrohead" (ISO 811) is a convenient measure of the ability of a fabric to prevent water penetration. It is presented as the pressure, in centimeters of water column (cmwc), required to force liquid water through a fabric. It is known that hydrohead depends inversely on pore size. Lower pore size produces higher hydrohead and higher pore size produces lower hydrohead. A ramp rate of 60 cmwc per minute was used in the measurements below.

Fabric air flow permeability is commonly measured using the Frazier measurement (ASTM D737). In this measurement, a pressure difference of 124.5 N/m² (0.5 inches of water column) is applied to a suitably clamped fabric sample and the resultant air flow rate is measured as Frazier permeability or more simply as "Frazier". Herein, Frazier permeability is reported in units of m³/m²/min. High Frazier corresponds to high air flow permeability and low Frazier corresponds to low air flow permeability.

Another important parameter in apparel is the ability of the fabric to expel moisture vapor from the inside of the jacket. This parameter is called the Moisture Vapor Transmission Rate (MVTR). Nanowebs were tested for MVTR using the ASTM E96 B method and are reported in units of g/m²/day.

Where samples are calendered, the calendaring took place at a pressure of 1.5 pounds per linear inch (pli) and 125 °C.

Unless otherwise specified, fluorosurfactant treatment was by means of a dip and squeeze method using hexanol at 0.6% as a wetting agent, in a 400g water bath where both sides of the nanoweb are fully submerged in the bath. The nanoweb was then dried in an oven at 139 °C for three minutes.

### Example 1

A two-layer fabric construction made from a 170gsm stretch nylon plain-weave fabric (available from Rose City Textiles in Portland, Oregon) and a nanoweb made from Nylon 6,6, with a basis weight of 10 gsm (grams per square meter) was produced. The two-layer fabric construction was produced by laminating the nylon woven fabric to the nanoweb using a solvent-based urethane adhesive using a "288-pattern" gravure-roll application with a pressure of 60 psi. The final two-layer fabric construction was then treated with a telomeric fluorinated surfactant (Zonyl® 7040, Du Pont, Wilmington, DE) at 8% solids (as received) in a water bath. The Zonyl® (commercially available from E. I. du Pont de Nemours and Company) was applied using a dip and squeeze method where both sides of the construction are fully submerged in the bath. The two-layer construction was then passed through an electrically heated oven at a temperature of 140 °C with a residence time of 2 minutes and 45 seconds.

The two-layer fabric construction had a hydrohead of 190 cmwc and an MVTR of 1397 g/m²/day.

### Comparative Example 1

A single layer of plain-woven stretch nylon was treated with Zonyl® 7040 in the same manner as described above and tested for hydrohead. The single layer of woven nylon, without the nonwoven nanoweb, had a hydrohead of only 33 cmwc and an MVTR of 1916 g/m²/day.

As can be seen from Example 1 and Comparative Example 1, the nanoweb can greatly increase the hydrohead of the fabric construction, when used in combination with a durable water repellant coating. Additionally, the hydrohead can be further increased, if desired, through post-processing of the hybrid nanoweb structure.

### Example 2

A single layer of the nanoweb made from Nylon 6,6, with a basis weight of 25 gsm, was calendared-and then treated with Zonyl® 7040 at 8% solids (as received). This treated nanoweb was then tested for hydrohead.. The first trial did not use any type of support system for the nanoweb, and the resulting hydrohead was 48 cmwc. For the second trial, a coarse, mesh support screen, with two gaskets on either side at the edge, was placed over the nanoweb in the test clamp. This screen was used to keep the nanoweb from bulging while applying the hydrostatic pressure. The resulting hydrohead was 166 cmwc using this coarse mesh support screen. For the third and fourth trials, a much finer mesh support screen was used to control the bulging of the nanoweb during the test. The resulting hydroheads were 244 cmwc and 269 cmwc, respectively, using this fine mesh support screen.

### Example 3

A single layer of the nanoweb made from Nylon 6,6, with a basis weight of 25 gsm, was treated with Zonyl® 7040 at 8% solids (as received). The first trial did not use any type of support system for the nanoweb, and the resulting hydrohead was 40 cmwc. For the second, third, and fourth trials, the fine mesh support screen was placed on top of the nanoweb in the test clamp to stop the nanoweb from bulging during the test. The resulting hydroheads were 202 cmwc, 214 cmwc, and 202 cmwc. MVTR was 1730 g/m²/day.

### Example 4

A single layer of the nanoweb made from Nylon 6,6, with a basis weight of 25 gsm, was calendared and then treated with Zonyl® 7040 at 16% solids (as received). The first trial did not use any type of support system for the nanoweb, and the resulting hydrohead was 46.5 cmwc. For the second and third trials, the fine mesh support screen was placed on top of the nanoweb in the test clamp to stop the nanoweb from bulging. The resulting hydroheads were 292 cmwc and 326 cmwc, respectively. For the fourth trial, a 170 gsm stretch nylon plain-weave fabric (available from Rose City Textiles in Portland, Oregon) was placed on top of the nanoweb in the test clamp to stop the nanoweb from bulging. The resulting hydrohead was 173 cmwc. For the fifth trial, two pieces of the calendered nanoweb were layered on top of each other and then covered with the fine mesh support screen in the test clamp. The resulting hydrohead was 550 cmwc. MVTR was 1586 g/m²/day.

### Example 5

A single layer of the nanoweb made from Nylon 6,6, with a basis weight of 25 gsm, was treated with Zonyl® 7040 at 16% solids (as received). Both the first and second trial used the fine mesh support screen to stop the nanoweb from bulging in the test clamp. The resulting hydroheads were 266 cmwc and 282 cmwc, respectively. For the third trial, the nanoweb was treated a second time by running the nanoweb back through the dip and squeeze method and then dried a second time in an oven at 139 °C for three minutes. The twice-treated nanoweb was then tested for hydrohead using the FX3000 Hydrostatic Tester. A fine mesh support screen was used in the test clamp to stop the nanoweb from bulging during the test. The resulting hydrohead was 290 cmwc. MVTR was 1708 g/m²/day.

### Example 6

A single layer of the nanoweb made from Nylon 6,6, with a basis weight of 25 gsm, was calendered and then treated with Zonal® 7040 at 16% solids (as received), For all three trials, the fine mesh support screen was used in the test clamp to stop the nanoweb from bulging during the test. The resultant hydroheads were 490 centimeters of water column (cmwc), 454 cmwc, and 586 cmwc. MVTR was 1701 g/m²/day.

### Example 7

A single layer of the nanoweb made from Nylon 6,6, with a basis weight of 25 gsm, was calendered and then treated with Zonyl® 7040 at 28% solids (as received), using hexanol at 0.6% as a wetting agent, in a 200g water bath. In the first, second, and third trials, a fine mesh support screen was used over the nanoweb in the test clamp to stop the nanoweb from bulging during the test. The resulting hydroheads were 372 cmwc, 300 cmwc, and 318 cmwc, respectively. In the fourth and fifth trials, two pieces of the treated nanoweb were layered on top of each other in the test clamp and then covered with the fine mesh support screen. The resulting hydroheads were 360 cmwc and 509 cmwc, respectively. Average MVTR was 1660 g/m²/day.

### Example 8

A single layer of the nanoweb made from Nylon 6,6, with a basis weight of 25 gsm, was calendered_and then treated with Zonyl® 7040 at 28% solids (as received), using hexanol at 0.6% as a wetting agent, in a 200g water bath. For the first trial, the fine mesh support screen was used in the test clamp to control the bulging of the nanoweb during testing. The resultant hydrohead was 600 cmwc. For the second trial, two pieces of the nanoweb were laid on top of each other and tested using the fine mesh support screen. The resultant hydrohead was 750 cmwc.

The MVTR data for the above samples are far above the industry standard and demonstrates that a durable water repellant treatment can be applied to the nonwoven nanoweb without decreasing the MVTR to an unacceptable level.

## Claims

1. A waterproof, breathable garment having the ability to pass moisture vapor while protecting the wearer from water comprising a composite fabric of a first outer fabric layer adjacent to and in a face-to-face relationship with a nanofiber layer, wherein the nanofiber layer comprises at least one porous layer of polymeric nanofibers having as number average diameter between 50 nm to 1000 nm and a basis weight of between 1 g/m² and 100 g/m², **characterized in that** the nanofiber layer is treated with a fluorated surfactant, and wherein the composite fabric has a Frazier air permeability according to ASTM D737 of between 1.2 m³/m²/ min and 7.6 m³/m²/min, an MVTR according to ASTM E96 B of greater than 500 g/m²/day, and a hydrostatic head according to ISO 811 of at least 50 cm of water.

2. The garment of claim 1 wherein the nanofiber layer and the first fabric layer are bonded to each other over a fraction of their surfaces.

3. The garment of claim 2 wherein a solvent-based adhesive is used to bond the layers.

4. The garment of claim 2 wherein the nanofiber layer is electrospun directly onto the surface of the first fabric layer and residual solvent from the electrospinning process is used to bond the layers.

5. The garment of claim 1 wherein the nanofiber layer comprises nanofibers of a polymer selected from the group consisting of polyacetals, polyamides, polyesters, cellulose ethers, cellulose esters, polyalkylene sulfides, polyarylene oxides, polysulfones, modified polysulfone polymers and combinations thereof.

6. The garment of claim 1 wherein the nanofiber layer comprises nanofibers of a polymer selected from the group consisting of poly(vinylchloride), polymethylmethacrylate, polystyrene, and copolymers thereof, poly(vinylidene fluoride), poly(vinylidene chloride), polyvinylalcohol in crosslinked and non-crosslinked forms.

7. The garment of claim 5 wherein the polymer is selected from the group consisting of nylon-6, nylon-6,6, and nylon 6,6-6,10.

8. The garment of claim 1 wherein the nanofiber layer is calendered.

9. The garment of claim 8 wherein the nanofiber layer is calendered while in contact with the first fabric layer.

10. The garment of claim 1 wherein the first fabric layer is woven from a materials selected from the group consisting of nylon, cotton, wool, silk, polyester, polyacrylic, polyolefin, and combinations.

11. The garment of claim 1 wherein the first fabric layer is woven from fibers that have a tenacity of less than about 8 g/Denier (gpd)).

## Patentansprüche

1. Wasserdichtes, atmungsaktives Kleidungsstück, das wasserdampfdurchlässig ist, während es den Träger vor Wasser schützt, mit einem Textilverbundstoff aus einer ersten, äußeren Stoffschicht, die an eine Nanofaserschicht angrenzt und ihr gegenüberliegt, wobei die Nanofaserschicht mindestens eine poröse Schicht aus Polymernanofasem mit einem zahlengemittelten Durchmesser zwischen 50 nm und 1000 nm und einer Flächenmasse zwischen 1 g/m² und 100 g/m² aufweist, **dadurch gekennzeichnet, dass** die Nanofaserschicht mit einem fluorierten Tensid behandelt wird, und wobei der Textilverbundstoff eine Frazier-Luftdurchlässigkeit gemäß ASTM D737 zwischen 1,2 m³/m²/min und 7,6 m³/m²/min, eine Wasserdampfdurchlassrate (MVTR) gemäß ASTM E 96 B von mehr als 500 g/m²/Tag und einen hydrostatischen Druck gemäß ISO 811 von mindestens 50 cm Wasser aufweist.

2. Kleidungsstück nach Anspruch 1, wobei die Nanofaserschicht und die erste Stoffschicht über einen Bruchteil ihrer Oberflächen miteinander verbunden sind.

3. Kleidungsstück nach Anspruch 2, wobei zum Verbinden der Schichten ein Klebstoff auf Lösungsmittelbasis verwendet wird.

4. Kleidungsstück nach Anspruch 2, wobei die Nanofaserschicht durch Elektrospinnen direkt auf die Oberfläche der ersten Stoffschicht aufgebracht wird und ein Lösungsmittelrest aus dem Elektrospinnverfahren zur Bindung der Schichten verwendet wird.

5. Kleidungsstück nach Anspruch 1, wobei die Nanofaserschicht Nanofasern aus einem Polymer aufweist, das aus der Gruppe ausgewählt ist, die aus Polyacetalen, Polyamiden, Polyestern, Celluloseethern, Celluloseestern, Polyalkylensulfiden, Polyarylenoxiden, Polysulfonen, modifizierten Polysulfon-Polymcrcn und Kombinationen davon besteht.

6. Kleidungsstück nach Anspruch 1, wobei die Nanofaserschicht Nanofasern aus einem Polymer aufweist, das aus der Gruppe ausgewählt ist, die aus Poly(vinylchlorid), Polymethylmethacrylat, Polystyrol und dessen Copolymeren, Poly(vinylidenfluorid), Poly(vinylidenchlorid), Polyvinylalkohol in vernetzten und unvernetzten Formen besteht.

7. Kleidungsstück nach Anspruch 5, wobei das Polymer aus der Gmppe-ausgewählt ist, die aus Nylon-6, Nylon-6,6 und Nylon-6,6-6,10 besteht.

8. Kleidungsstück nach Anspruch 1, wobei die Nanofaserschicht kalandriert wird.

9. Kleidungsstück nach Anspruch 8, wobei die Nanofaserschicht kalandriert wird, während sie sich im Kontakt mit der ersten Stoffschicht befindet.

10. Kleidungsstück nach Anspruch 1, wobei die erste Stoffschicht aus einem Material gewebt wird, das aus der Gruppe ausgewählt ist, die aus Nylon, Baumwolle, Wolle, Seide, Polyester, Polyacryl, Polyolefin und Kombinationen besteht.

11. 1 . Kleidungsstück nach Anspruch 1, wobei die erste Stoffschicht aus Fasern gewebt wird, die eine Reißfestigkeit von weniger als etwa 8 g/Denier (g/den) aufweisen.

## Revendications

1. Vêtement respirable imperméable ayant l'aptitude à laisser passer la vapeur d'eau tout en protégeant l'utilisateur de l'eau, comprenant une étoffe composite d'une première couche d'étoffe externe adjacente à et en relation face-à-face avec une couche de nanofibres, dans lequel la couche de nanofibres comprend au moins une couche poreuse de nanofibres polymères ayant un diamètre moyen en nombre de 50 nm à 1000 nm et une masse surfacique entre 1 g/m² et 100 g/m², **caractérisé en ce que** la couche de nanofibres est traitée avec un tensioactif fluoré, dans lequel l'étoffe composite a une perméabilité à l'air Frazier selon ASTM D737 entre 1,2 m³/m²/min. et 7,6 m³/m²/min., une MVTR (vitesse de transmission de vapeur d'eau) selon ASTM E-96B supérieure à 500 g/m²/jour et une charge hydrostatique selon ISO 811 d'au moins 50 cm d'eau.

2. Vêtement selon la revendication 1, dans lequel la couche de nanofibres et la première couche d'étoffe sont liées entre elles sur une fraction de leurs surfaces.

3. Vêtement selon la revendication 2, dans lequel un adhésif à base de solvant est utilisé pour lier les couches.

4. Vêtement selon la revendication 2, dans lequel la couche de nanofibres est électrofilée directement sur la surface de la première couche d'étoffe, et le solvant résiduel du traitement d'électrofilature est utilisé pour lier les couches.

5. Vêtement selon la revendication 1, dans lequel la couche de nanofibres comprend des nanofibres d'un polymère choisi dans le groupe constitué par les polyacétals, les polyamides, les polyesters, les éthers de cellulose, les esters de cellulose, les sulfures de polyalkylène, les oxydes de polyarylène, les polysulfones, les polymères de polysulfone modifiés et des combinaisons de ceux-ci.

6. Vêtement selon la revendication 1, dans lequel la couche de nanofibres comprend des nanofibres d'un polymère choisi dans le groupe constitué par un poly(chlorure de vinyle), un polyméthacrylate de méthyle, un polystyrène, et les copolymères de ceux-ci, un poly(fluorure de vinylidène), un poly(chlorure de vinylidène), un alcool polyvinylique sous formes réticulées et non réticulées.

7. Vêtement selon la revendication 5, dans lequel le polymère est choisi dans le groupe constitué par le nylon-6, le nylon-6,6 et le nylon 6,6-6,10.

8. Vêtement selon la revendication 1, dans lequel la couche de nanofibres est calandrée.

9. Vêtement selon la revendication 8, dans lequel la couche de nanofibres est calandrée pendant qu'elle est en contact avec la première couche d'étoffe.

10. Vêtement selon la revendication 1, dans lequel la première couche d'étoffe est tissée à partir d'un matériau choisi dans le groupe constitué par le nylon, le coton, la laine, la soie, un polyester, une substance polyacrylique, une polyoléfine et des combinaisons.

11. Vêtement selon la revendication 1, dans lequel la première couche d'étoffe est tissée à partir de fibres qui ont une ténacité inférieure à environ 8 g/denier (gpd).
